# EUROPEAN PATENT APPLICATION

(11) **EP 0 775 933 A2**
(43) Date of publication of application: **28.05.1997**
(21) Application number: 96308502.2
(22) Date of filing: 25.11.1996
(51) Int. Cl.: G02F 1/139, G02F 1/1335

(54) **A display device**

(30) Priority: 24.11.1995 GB 9524115
(71) Applicant: VARINTELLIGENT (BVI) LIMITED, Tortola, British Virgin Islands (VG); JOHNSON, Terence Leslie, London WC2A 1SD (GB)
(72) Inventor: Li, Ching Shan, Kwun Tong, Kowloon (HK); Lee, Siu Ki, Kwun Tong, Kowloon (HK); Yu, Wai Leung, Kwun Tong, Kowloon (HK); Wan, Kar Mun, Kwun Tong, Kowloon (HK)
(74) Representative: Johnson, Terence Leslie

(57) **Abstract**

A liquid crystal display device (100) for generating different colours comprises a liquid crystal cell with a front polarizer (1) and a rear polarizer (8), wherein the rear polarizer is optically transmissive, reflective and/or transflective. In the case that the rear polarizer is transmissive or transflective a broad band back light (9) may be provided to improve the image quality. The various colours are generated in the liquid crystal display device by application of an electric field which causes a change in cell retardation. In one embodiment a retardation layer is provided between the front polarizer (1) and the other elements of the liquid crystal cell for generating different colours.

## Description

The invention relates to a display device, particularly a liquid crystal display device for generating different colours.

Such devices, which are usually multiplexable, utilising a multiplexable driver capable of generating various voltages for selectively generating multi-colours simultaneously, have the disadvantage that they are at best dim in ambient light or in artificial, particularly neon, light.

It is an object of the invention to seek to mitigate this disadvantage.

According to the invention there is provided a liquid crystal display device for generating different colours, comprising a liquid crystal cell with a front polarizer and a rear polarizer, wherein the rear polarizer is optically transmissive, reflective and/or transflective.

The polarizer may be interchangeable. This provides for switching of the rear polarizer to provide an adaptable or adjustable display device which is flexible in operation.

The rear polarizer may be transflective. This provides for effective, bright, displays under a majority of background lighting conditions.

There may be a source adapted to provide light incident on the rear polarizer in a direction towards the front polarizer.

This again provides for enhanced colour imaging.

The liquid crystal cell may comprise a pair of substrates each supporting electrodes and separated with spacers to provide cell thickness 'd', an orientation layer covering each electrode being applied to align liquid crystals loaded into the cell, and the liquid crystal cell being formed such that the product of optical anisotropy of liquid crystal Δn and cell thickness 'd' is in the range of 1.4 to 1.6 µm. This provides for optimum brightness.

The twist angle of the liquid crystal in the device may be between 230° and 250°, and is preferably 240°.

A liquid crystal layer adjacent to the orientation layer may have a tilt angle in the range 1° to 10°.

The ratio of cell thickness, d, and pitch, p, (d/p ratio) may be in the range of 0.5 to 1.0.

The angle between the absorbtion axis of the polarizers and the orientation direction of liquid crystal layer adjacent to the substrate which is adjacent to the polarizer may be in the range 30° to 60°.

The device may comprise a static/multiplexable driver capable of generating various voltages but with a common reference voltage whereby multiple colours can be displayed simultaneously.

Two embodiments of a liquid crystal display device for generating different colours are hereinafter described, by way of example, with reference to the accompanying drawings.
Fig. 1 shows a cross-section of a colour coded supertwisted nematic display (CCSTN) according to a first embodiment of the invention;
Fig. 2 shows diagrammatically various axial and rubbing directions of the device shown in Fig. 1;
Fig. 3 shows the calculated dependence of normalized luminance on cell retardations;
Fig. 4a shows the calculated dependence of normalized luminance on pretilt angle of liquid crystals;
Fig. 4b shows the calculated dependence of normalised luminance on twist angle;
Fig. 4c shows background colour co-ordinate at different twist angles;
Fig. 5 shows the calculated colour coordinates for a typical reflective CCSTN as a function of applied voltages;
Fig. 6 shows the colour coordinates measured for a typical reflective CCSTN as a function of applied voltages (0-3 volt) under a static driving scheme;
Fig. 7a shows the colour coordinates measured for the cell of Fig. 6 as a function of applied voltages under a multiplexing scheme of 1/64 duty and 1/9 bias;
Fig. 7b shows the colour coordinates measured from a typical transflective CCSTN as a function of applied voltages under a multiplexing scheme of 1/128 duty and 1/12 bias;
Fig. 8 shows a cross-section of a colour coded supertwisted nematic display (FCCSTN) according to a second embodiment of the invention.
Fig. 9 shows diagrammatically various axial and rubbing directions of the device shown in Fig. 8; and
Fig. 10 shows the colour coordinates measured for the cell of Fig 8, with a rear reflective polarizer, as a function of applied voltages under a mutiplexing scheme of 1/64 duty and 1/9 bias.

Referring to the drawings, there is shown a first embodiment of a liquid crystal display device 100 for generating different colours simultaneously, the device being driven by a multiplexable driver (not shown) capable of generating various voltages, at least four in the embodiment, to generate selectively multi-colours simultaneously.

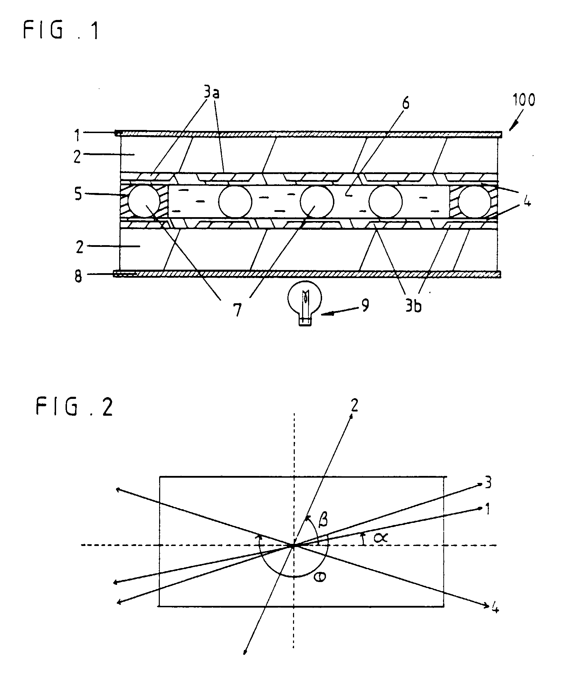

The device 100 (Fig. 1) comprises a front (in use) linear polarizer 1, supporting substrates, layers or plates 2, respective front and rear electrode layers 3a, 3b (forming for example a dot matrix), orientation layers 4, a perimeter seal 5, a nematic liquid crystal 6, spaced-apart spacers 7 such as glass fibre and/or polymer spheres and a rear (in use) linear polarizer 8. There is also a source of light 9 adapted to provide light incident on the rear polarizer.

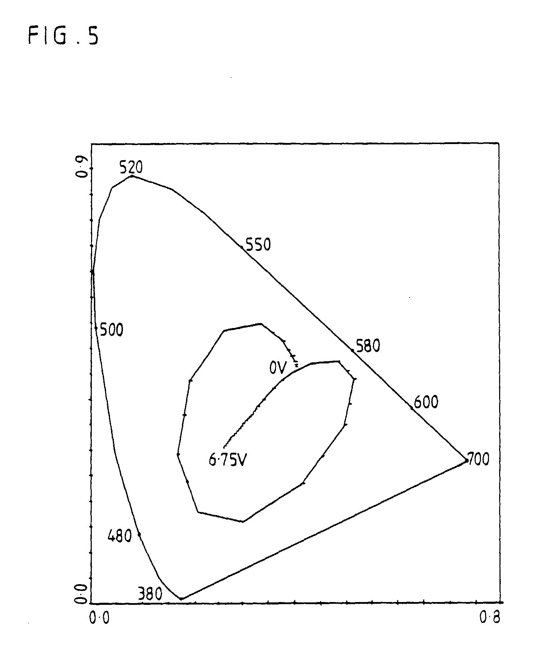

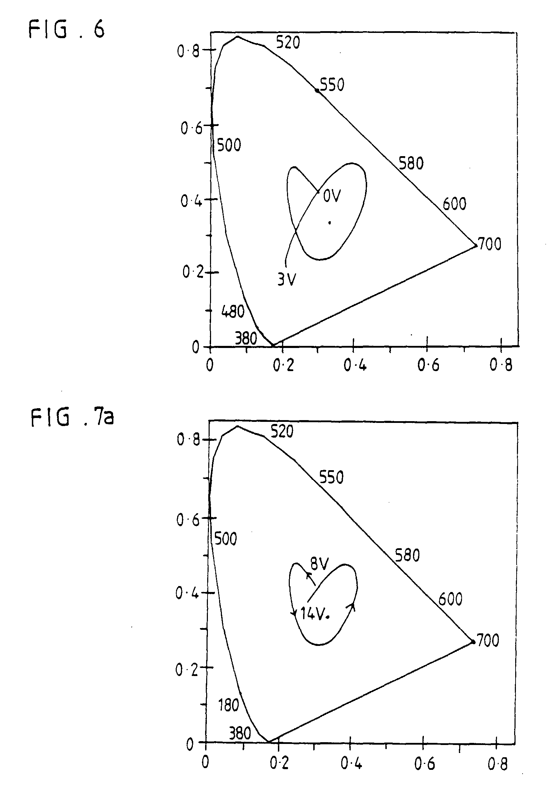

Referring to Fig. 2, that Fig. shows various axial and rubbing directions for the device 100, arrow 1 indicating the absorbtion axis of the front linear polarizer 1, arrow 2 the absorbtion axis of the rear linear polarizer 8, arrow 3 the buffing direction of the rear substrate 2, arrow 4 the buffing direction of the front substrate 2, angle α the front linear polarizer angle, angle β the rear linear polarizer angle and angle Φ the total twist angle of the liquid crystal 6. In Fig. 5, the calculated coordinates (C.I.E. 1931) are shown. The simulated colour coded supertwisted nematic display (CCSTN) has a retardation value of 1.5µm, a twist angle of 240°, a cell gap or thickness to pitch (d/p) ratio of 0.55µm and a tilt angle of 5°, the angles of the front and rear polarizers being respectively 10° and 80°. This is for a particular embodiment of display, other parameters of which are shown in Fig. 6 where the display has again a retardation value of 1.40 - 1.60µm, preferably 1.45 - 1.50µm, and more preferably 1.5µm, a twist angle of 240°, a d/p ratio of 0.55µm, the tilt angle being however 4°. The liquid crystal is 1333 (BDH/Merck) or an equivalent, the front and rear polarizer angles being respectively 15° and 80°.

The embodiment shown in Fig. 1 thus relates to a colour electro-optical device consisting of a supertwist nematic liquid crystal cell sandwiched between two polarizers. Liquid crystals of positive dielectric anisotropy are loaded into the cell which is made up of the two supporting substrates 2 such as glass laminated with adhesives and separated by the spacers 7 such as glass fibers and polymer spheres. The surface of the glass substrate 2 facing the interior of cell 100 is coated with a layer of transparent electrode such as Indium Tin Oxide and the electrode layers 3a, 3b are patterned in the form of a dot matrix using a convention photolithography process. The twisting angle of liquid crystals is set to be 240° ± 10° by the application of chiral dopant and the coating of anisotropic alignment layers onto both electrode surfaces. Various colours can be generated by the application of electric field via the change in cell retardation. The device can be operated in transmissive, transflective, and/or reflective mode depending on the type of polarizers. Each mode provides distinct advantages, and is selected according to the properties required of the liquid crystal display device.

In the case of a transmissive operating mode, both front and back polarizers 1, 8 respectively must be transmissive and a backlight such as cold cathode fluorescent lamp, tungsten filament lamp, or white electroluminescent (broadband) lamp 9 is utilised.

Using a transflective polarizer 8 on the rear side of the cell 100 along with a white (broadband) backlight 9, such as a colour cathode fluorescent lamp, electroluminescent lamp, or a tungsten filament lamp, a transflective display is achieved.

In both the transmissive and transflective modes, the emission range of the backlight is preferably 350 - 750nm.

When a reflective polarizer is applied to the rear side of the cell, a reflective display results in production of vivid multi-colours depending on the ambient lighting conditions. The driving scheme ranges from static to high level of multiplexing (even beyond 1/240 duty) and can be applied without significant change in colour variation and brightness. Typically, a micro-controller capable of generating various grey-scale levels can be applied to drive the device for the production of a variety of colours simultaneously under a multiplexing driving scheme.

In a preferred embodiment, the tilt angle ranges from 1° to 10° and the d/p ratio can be in the range 0.5 to 1.0, the product of optical ansotropy (Δn) of the liquid crystal material(s) and cell thickness 'd' being in the range 1.4 to 1.6µm. It will be understood that a device embodying the invention can selectively generate multiple colours simultaneously without the use of a colour filter or filters. Moreover, using a transflective rear polarizer and a back light source 9, a bright image is achievable in all surrounding conditions, both with ambient background light and artificial light, and moreover the device can then be operated in the dark, the multi-colour image being bright and crisp under all conditions. By use of suitable voltage application this image can be mobile or static. The multi-colour image can be selectively generated from at least four colours as a minimum. Effectively, each pixel of the display can be transformed into different colours by selective driving voltage application or a driving scheme. The transflective polarizer, as the term implies, can both reflect and transmit light. In a transmissive mode, for example in a dark room, the back-light 9 will be activated, in a reflective mode, ambient light might be dominant and in a transflective mode, artificial light might be dominant, but the light 9 will in both cases usually be activated, to provide the bright and crisp image. The rear polarizer can be switched electronically to one of the three modes, transmissive, reflective and transflective. Optimum brightness of the multi-colour image is achieved by varying the polarizing angle and retardation angle.

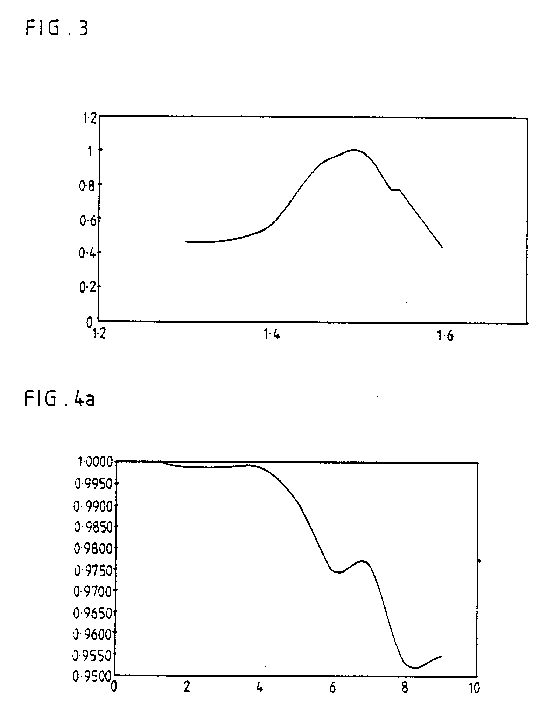

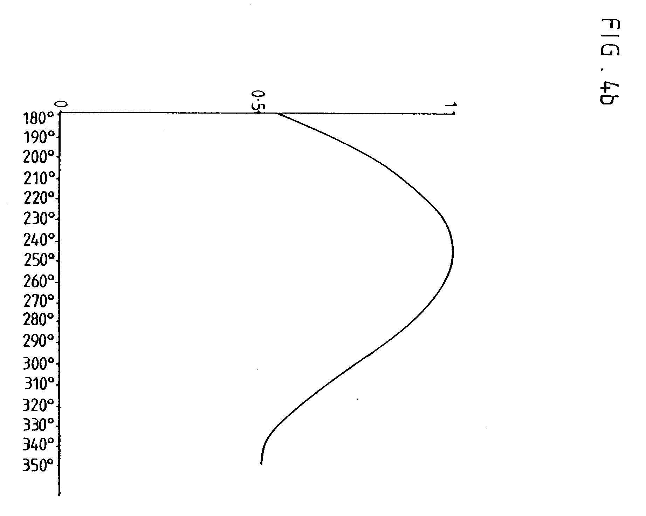

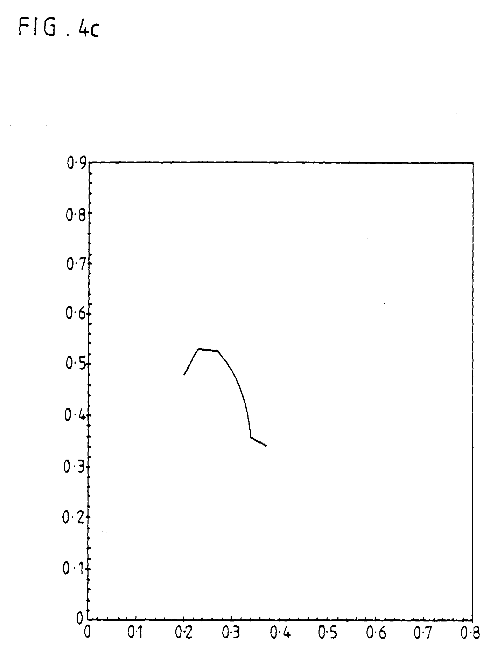

By choosing the range of cell retardation, tilt angles and twist angles described, the maximum luminance (i.e. highest brightness) is obtained, as illustrated in Figs. 3, 4a and 4b. In addition, as shown in Fig. 4c, the twist angle of 240° is the closest to the energetic point (×, y = 0.33, 0.33), and this is why twist angles of 240° ± 10 are selected. The cell parameters are also optimised to generate maximum change in colours as the voltage varies.

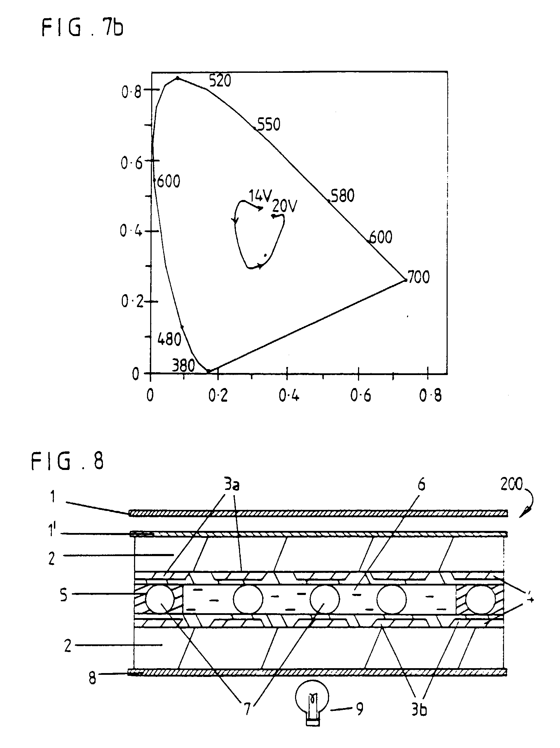

The device to which Fig. 7b relates has a cell gap of 6.2µm and is filled with Rodic liquid crystal RDP41117E087 having an optical anisotropy of 0.24. The twist angle is set to 240° and the front and rear polarizer angles are 15° and 80° respectively. A cold cathode fluorescent lamp is applied to illuminate the device at both front and rear sides to provide the colour coordinate measurements shown in Fig. 7b. The cell retardation of this device is 1.49µm. Alternatively, Merck 1333 liquid crystal can be used, with a 6.4µm cell gap to generate a cell retardation of 1.47µm. The cell retardation is an important parameter.

Figs. 8, 9 and 10 relate to a second embodiment of the invention. Like reference numerals designate elements common to the first embodiment described above.

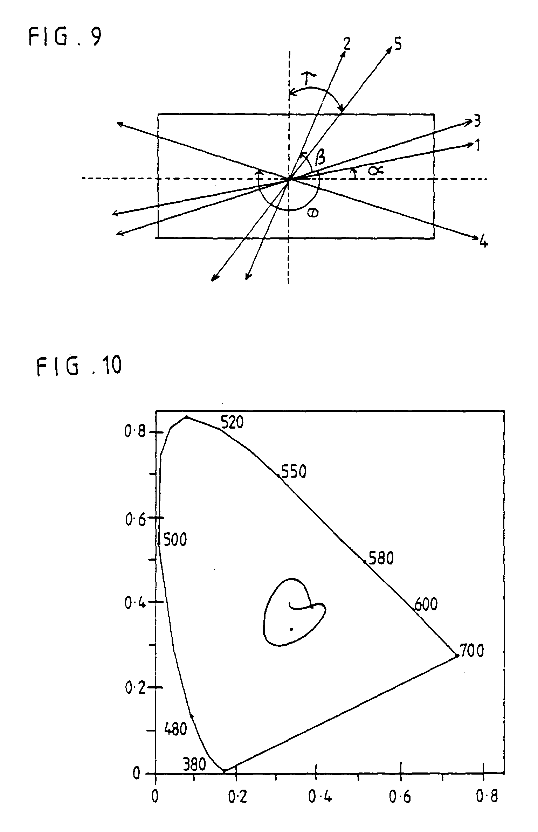

Fig. 8 shows a second embodiment of a liquid crystal display device 200. In this embodiment one or more uniaxial and/or biaxial retardation film(s) 1' is/are inserted between the front polarizer 1 and the front glass substrate 2. The retardation film(s) 1' give(s) a resultant retardation value of 1640 ± 20nm. The liquid crystal display device 200 generates different colours from those produced by the device 100 of the first embodiment. The angle of the optical axis of the retardation film 1', λ, which is indicated by arrow 5 in Fig. 9, can be set to 35° ± 10°. In addition, the transmissive, reflective and/or transflective rear polarizer 8 can be used to control the colours produced.

The insertion of one or more retardation films makes the background colour whiter (it reduces the tendency for the background to appear light green), provides an additional means to change the colours displayed, and widens the viewing angle. The film(s) effectively change linearly polarised light into elliptically polarised light, leading to a subsequent change in colours. In this embodiment, the film(s) is/are made from polycarbonate, and can be obtained from Nitto Denko, Polatechno and Sumitomo Chemical.

## Claims

1. A liquid crystal display device for generating different colours, comprising a liquid crystal cell with a front polarizer and a rear polarizer, wherein the rear polarizer is optically transmissive, reflective and/or transflective.

2. A liquid crystal display according to Claim 1, the polarizer being interchangeable.

3. A device according to Claim 2, the rear polarizer being transflective.

4. A device according to Claim 3, there being a source adapted to provide light incident on the rear polarizer in a direction towards the front polarizer.

5. A device according to any preceding claim, the liquid crystal cell comprising a pair of substrates each supporting electrodes and separated with spacers to provide cell thickness 'd', an orientation layer covering each electrode being applied to align liquid crystals loaded into the cell, and the liquid crystal cell being formed such that the product of optical anisotropy of liquid crystal Δn and cell thickness, 'd' is in the range of 1.4 to 1.6 µm.

6. A device according to Claim 5, the twist angle of the liquid crystal in the device being in the range of 230° to 250°.

7. A device according to Claim 6, a liquid crystal layer adjacent to the orientation layer having a tilt angle in the range 1° to 10°.

8. A device according to Claim 7, the ratio of cell thickness, d, and pitch, p, (d/p ratio) being in the range of 0.5 to 1.0.

9. A device according to any of Claims 5 to 8, the angle between the absorbtion axis of the polarizers and the orientation direction of liquid crystal layer adjacent to the substrate which is adjacent to the polarizer being in the range 30° to 60°.

10. A device according to Claim 9, comprising a static/multiplexable driver capable of generating various voltages but with a common reference voltage whereby multiple colours simultaneously can be displayed.

11. A device according to any one of the preceding claims, wherein the device is a supertwisted nematic display.

12. A device according to any one of the preceding claims, comprising at least one retardation film.

13. A device according to any one of the preceding claims, wherein the rear polarizer is optically transmissive or transflective, and wherein a broadband backlight is provided.

14. A device according to any one of the preceding claims, wherein the device has a retardation value of 1.45-1.50µm.
